# EUROPÄISCHE PATENTSCHRIFT

(11) **EP 1 666 428 B1**
(45) Veröffentlichungstag und Bekanntmachung des Hinweises auf die Patenterteilung: **16.05.2018**
(21) Anmeldenummer: 05025185.9
(22) Anmeldetag: 17.11.2005
(51) Int. Cl.: C03C 17/245, C03C 17/34

(54) **Hochtemperatursbeständiger Belag aus TiOx**
High temperature resistant TiOx coating
Revêtement en TiOx résistant aux témperatures élevées

(30) Priorität: 03.12.2004 DE 102004058426
(43) Veröffentlichungstag der Anmeldung: 07.06.2006
(73) Patentinhaber: INTERPANE Entwicklungs-und Beratungsgesellschaft mbH, 37697 Lauenförde (DE)
(72) Erfinder: Segner, Johannes, Dr., 88212 Ravensburg (DE); Weis, Hansjörg, Dr., 37671 Höxter (DE)
(74) Vertreter: Körfer, Thomas

(56) Entgegenhaltungen:
- EP-A- 0 967 008
- EP-A- 1 153 658
- EP-A- 1 538 131
- EP-A1- 0 995 724
- US-A- 4 940 636
- US-A- 5 776 847
- US-A- 5 930 046
- US-A1- 2001 031 365
- US-A1- 2002 027 817
- US-A1- 2003 170 504
- US-A1- 2004 069 615
- US-A1- 2004 202 890
- HANADA T ET AL: "PHYSICAL PROPERTIES AND STRUCTURE OF RF-SPUTTERED AMORPHOUS FILMS IN THE SYSTEM TIO2-SIO2" JOURNAL OF THE AMERICAN CERAMIC SOCIETY, BLACKWELL PUBLISHING, MALDEN, MA, US, Bd. 67, Nr. 1, Januar 1984 (1984-01), Seiten 52-56, XP009058837 ISSN: 0002-7820

## Beschreibung

Die vorliegende Erfindung betrifft ein beschichtetes Substrat aus einem transparenten Material mit einer über dem Substrat ausgebildeten Metalloxidschicht aus Titanoxid (TiOₓ) und Verfahren zur Herstellung dasselbe. Metalloxidschichten aus Titanoxid (TiOₓ) auf einem transparenten Substrat sind aus der DE 198 07 930 A1 bekannt. Es handelt sich hierbei um eine dielektrische Metalloxidschicht aus Titanoxid (TiOₓ), die auf dem Substrat als haftvermittelnde Schicht und als Entspiegelungsschicht dient. Auf dieser Schicht wird dann eine Silberschicht als Funktionsschicht vorgesehen, die wiederum zwischen zwei Oxidfilmen eingebettet ist.

Derartige, auf Substraten, in der Regel Glasscheiben, aufgebrachten Schichtsysteme werden häufig einer Wärmebehandlung bei verhältnismäßig hoher Temperatur unterzogen, um die Substrate zu biegen oder thermisch vorzuspannen. Dabei sind Prozesstemperaturen von mehr als 600°C üblich. Da die Substrate normalerweise vor der Behandlung beschichtet werden, ist auch das Schichtsystem diesen hohen Temperaturen ausgesetzt. Dieses stellt hohe Anforderungen an das Schichtsystem. Auch bei der Verarbeitung zu Verbundglas treten derart hohe Prozesstemperaturen auf.

Bei der Erhitzung von Titanoxidschichten kommt es bei bestimmten Temperaturen beziehungsweise Temperaturbereichen zu mehreren Umwandlungen des Titanoxid-Kristallgitters. Ab etwa 250 - 350°C wandelt sich die in der Regel amorph abgeschiedene Titanoxidphase zunehmend in Anatas um. Bei etwa 550°C beginnt dann die Umwandlung der Anatas-Mondifikation zu einem Rutil-Gitter. Beide Gitterumwandlungen gehen mit einer Abnahme der mittleren Gitterkonstante beziehungsweise des mittleren Atomabstandes einher. Somit kommt es in der Titanoxidschicht unweigerlich zu Zugspannungen aufgrund der Kristallphasenumwandlung.

Diese Spannungen werden in der Regel durch Rissbildung in der Schicht kompensiert. Solche Risse sind häufig sichtbar und führen zu unerwünschter, starker Lichtstreuung. Damit kommt es unweigerlich zu einer Verschlechterung der optischen Eigenschaften der Titanoxidschicht, wie zu einer verminderten Durchsicht und/oder Brillanz.

Die Rissbildung kann auch die Langzeitstabilität der Titanoxidschichten und/oder von Schichten in der Nachbarschaft dieser Titanoxidschichten erheblich beeinträchtigen. Bei einem feuchten Wechselklima kommt es in der Regel zu einer hohen Wasseraufnahme. Dieses führt beispielsweise zu einer Änderung des Brechungsindex der Schicht. Das hat Verschiebungen im Spektralbereich der Beschichtungen zur Folge. Ein weiterer Nachteil der Rissbildung ist die Beeinträchtigung von in der Titanoxidschicht aufgenommenem Wasser mit benachbarten Schichten, wie beispielsweise von Silberschichten bei Low-E-Verglasungen.

Die US 2002/0027817 A1 beschreibt ein Sputtertarget mit einem Targetmaterial aus beispielsweise TiO₂ und SiO₂. Das in Beispiel 25 beschriebene Material weist keine weitere Schicht auf.

Aus der EP 0 967 008 A2 ist ein Film aus Titandioxid/Siliciumdioxid bekannt, welcher als Reinigungsfilter verwendet wird. Es sind keine weiteren Schichten auf diesem Film vorgesehen.

Die EP 1 153 658 A1 beschreibt einen Fotokatalysator mit einem Dreischichtensystem. Zwischen einer Titanoxidschicht und einer Siliciumoxidschicht ist eine Mischschicht aus TiO_{2/}SiO₂ vorgesehen. Diese Schichtstruktur ist unterschiedlich zu der vorliegend beanspruchten Schichtstruktur.

Aus der US 4,940,636 ist ein optischer Interferenzfilter bekannt, der aus einer bestimmten Schichtstruktur aufgebaut ist. Zwischen amorphen SiO₂-Schichten sind Schichten aus TiO₂ mit anderen Oxiden, wie ZrO₂, HfO₂ angeordnet. Diese Schichtstruktur ist ebenfalls unterschiedlich zu der hier vorliegend beanspruchten Schichtstruktur.

Aus der US 2003/0170504 A1 ist ein optischer Filter bekannt, der einen dielektrischen Vielschichtenfilm aufweist. Eine der Schichten kann beispielsweise eine Mischung aus Titanoxid mit Nioboxid sein. Es ist allerdings keine Silberschicht vorgesehen.

Die US 5,776,847 beschreibt gesinterte dampfabgeschiedene Materialien auf der Basis von Titanoxid und eines anderen Oxids, wie beispielsweise Zirkonoxid, Hafniumoxid, Yttriumoxid und Ytterbiumoxid. Es gibt keinen Hinweis auf eine Silberschicht.

Die US 2004/0069615 A1 beschreibt einen fotokatalytischen Film, der Titanoxid als Hauptkomponente und mindestens ein anderes Metall aufweist. Dieses Metall liegt nicht als Metalloxid vor.

Im Dokument T. Hanada et al. "PHYSICAL PROPERTIES AND STRUCTURE OF RF-SPUTTERED AMOURPHOUS FILMS IN THE SYSTEM TIO2-SIO2" JOURNAL OF THE AMERICAN CERAMIC SOCIETY, BLACKWELL PUBLISHING, MALDEN, MA, US, Bd. 67, Nr. 1, Januar 1984 (1984-01), Seiten 52-56, ISSN: 0002-7820, werden amorphe Filme aus TiO₂-SiO₂ beschrieben. Diese Filme werden auf entsprechenden Substraten abgeschieden. Es werden keine weiteren Schichten angesprochen.

Aus der US 5,930,046 ist ein vielschichtiger Belag bekannt, wobei die Zusammensetzungen der einzelnen Schichten keine Mischschichten aus Oxiden sind.

Die US 2004/0202890 A1 beschreibt eine Titanoxidschicht, die als Dotierungsmittel ein anderes Metall enthält. Dieses Metall liegt nicht in oxidischer Form vor.

Die US 2001/0031365 A1 beschreibt transparente Substrate, die eine Antireflektionsbeschichtung aufweisen. Diese Antireflektionsschicht ist eine Schichtanordnung aus sich abwechselnden dünnen Schichten mit hohen und niedrigen Brechungsindizes. Diese Dünnschichten können aus einem dielektrischen Material bestehen.

Die EP 1 538 131 A1 beschreibt ein Schichtsystem, das auf ein Substrat aufbringbar ist und mindestens eine Silberfunktionsschicht aufweist. Die erste Entspiegelungsschicht kann eine modifizierte TiO₂-Schicht sein, wie beispielsweise TiNbOₓ. Auf dieser Schicht ist, keine Silberschicht vorgesehen.

Die EP 0 995 724 A1 beschreibt ein transparentes Substrat, das mit einem Aufbau aus dünnen Schichten versehen ist, der mindestens eine niedrig emittierende Metallschicht, beispielsweise eine Silberschicht, mit Reflektionseigenschaften im Infrarot umfasst. Der Schichtaufbau, sieht zwingend vor, dass unterhalb der metallischen Funktionsschicht immer eine Haftschicht aus ZnO vorhanden ist. Somit ist keine modifizierte Titanoxidschicht direkt unterhalb der metallischen Funktionsschicht beschrieben.

Aus der US 2004/0241490 A1 ist ein Schichtaufbau bekannt, wobei auf einem Substrat Beschichtungen aus Titan und Aluminium vorgesehen sind. Eine sogenannte Doppelmetallschicht ist auch beschrieben. Diese Ausführungsform umfasst zwei Silberschichten. In beiden Fällen ist die Silberschicht auf einem Zinkoxidfilm (jeweils 66) aufgetragen.

Es ist daher Aufgabe der vorliegenden Erfindung, ein beschichtetes Substrat aus einem transparenten Material mit einer über dem Substrat ausgebildeten Metalloxidschicht aus Titanoxid (TiOₓ) anzugeben, der bei hohen Temperaturen stabil ist und dessen Funktionstüchtigkeit als optische Schicht über einen langen Zeitraum gewährleistet ist. Es ist eine weitere Aufgabe der vorliegenden Erfindung, Verfahren zur Verfügung zu stellen, mit denen effizient ein funktionstüchtiger und langzeitbeständiger Titanoxidbelag für optische Beschichtungsaufgaben hergestellt werden.

Diese Aufgaben werden mit dem Substrat nach Anspruch 1 und mit den Verfahren nach Anspruch 8 beziehungsweise Anspruch 14 gelöst

Die Unteransprüche betreffen bevorzugte Ausführungsformen das erfindungsgemäße beschichtetes Substrats und Verfahren zur Herstellung dasselbe. Der Erfindung liegt die Erkenntnis zu Grunde, dass eine erhöhte thermische Stabilität der amorphen Phase oder der Anatasphase des Titanoxids überraschenderweise erreicht wird, wenn die Titanoxidschicht mindestens ein weiteres Metalloxid enthält. Bei dieser modifizierten Titanoxidschicht ist das weitere Metalloxid in das Gitter eingebaut, wobei das Titanoxidgitter gestört wird. Dieses hat insbesondere auch einen positiven Effekt auf die Erhöhung der Umwandlungstemperatur, beispielsweise bei der Umwandlung von amorphem Titanoxid in die Anatasphase des Titanoxids.

Erfindungsgemäß enthält die Titanoxidschicht mindestens ein weiteres Metalloxid, dessen Metallatom eine Koordinationszahl aufweist, die nicht der Koordinationszahl des Titans im Titanoxid entspricht, wobei das weitere Metalloxid Siliciumdioxid ist. Die Titanoxidschicht das erfindungsgemäße Substrats weist eine Zusammensetzung TiOₓ auf, wobei der Gehalt von Sauerstoff: Titan größer oder gleich 1,85 ist. Die Koordinationszahl des Titans in diesen Titanoxiden beträgt üblicherweise 6, das heißt, das Titanatom ist oktaedrisch von 6 Sauerstoffatomen im Ruti1-Anatas-Gitter umgeben.

Ausgehend von der Koordinationszahl des Titans im Titanoxid von 6 weist das mindestens eine weitere Metalloxid ein Metallatom der Koordinationszahl 4 auf. Obwohl jedes Metalloxid mit einem Metallatom der Koordinationszahlen 4, 5, 7 und 8 für die Modifizierung des Titanoxids grundsätzlich geeignet ist, so lange es in der Lage ist, das Titanoxidgitter (6-fach hexagonal koordiniert) zu stören, ist, gemäß der Erfindung, das weitere Metalloxid Siliciumdioxid, das zusammen mit dem Titanoxid in der modifizierten Titanoxidschicht eine Art Mischung bildet.

Es hat sich herausgestellt, dass bereits ab einer Konzentration von etwa 2 At-% des Metallatoms bzw. Kations des weiteren Metalloxids, bezogen auf die Konzentration von Titan in der Titanoxidschicht, die Umwandlungstemperatur des Titanoxidgitters vom amorphen Zustand zum Anatasgitter oder vom Anatasgitter zum Rutilgitter erhöht ist. Bei einer Konzentration von über ca. 12 At-% werden die Schichten allerdings entweder instabil im Hinblick auf ihre Stabilität gegenüber Feuchtigkeit, oder es kommt zu einer Veränderung des Brechungsindex durch die Konzentration des Metallatoms des weiteren Metalloxids, wobei sich zunehmend lichtstreuende Schichten ausbilden. Die Konzentration des Metallatoms bzw. Kations des weiteren Metalloxids in der Titanoxidschicht liegt in einem Bereich von 2 bis 10 At-%, bezogen auf die Titankonzentration. Bevorzugt beträgt die Konzentration des Kations 4 bis 10 At-%.

Die Dicke der modifizierten Titanoxidschicht variiert in Abhängigkeit der beabsichtigen Verwendung. Sie kann eine Dicke von 1 bis 1000 nm aufweisen, wobei eine Dicke in einem Bereich von 1 bis 300 nm bevorzugt ist und ein Dickenbereich von 2 bis 70 nm besonders bevorzugt ist.

Bei dem transparenten Substrat handelt es sich in der Regel um Glasscheiben, insbesondere Float-Glasscheiben. Geeignet sind jedoch auch Kunststoffscheiben oder Kunststofffolien, insbesondere solche Kunststofffolien, die bei der Herstellung von Verbundglas zwischen den Glasscheiben eingefügt werden. Das erfindungsgemäße beschichtetes Substrat kann auch zwischen dem Substrat und der modifizierten Titanoxidschicht eine Zwischenschicht aufweisen. Beispiele für eine derartige Zwischenschicht sind solche Zwischenschichten, die eine Haftvermittlung zwischen dem Substrat und der modifizierten Titanoxid herstellen können und Diffusionsbarriereschichten.

In einer bevorzugten Ausführungsform das beschichtetes Substrats sind auf der modifizierten Titanoxidschicht weitere Schichten vorgesehen. Auf der Titanoxidschicht ist eine Silberschicht als Funktionsschicht vorhanden. Es können auch noch weitere Schichten vorgesehen werden, wie beispielsweise Haftschichten und Barriereschichten. Das erfindungsgemäße beschichtetes Substrat mit der modifizierten Titanoxidschicht kann nach jedem Verfahren hergestellt werden, mit dem eine Dünnschicht auf einem Substrat hergestellt werden kann.

Ein Beispiel für die Herstellung das beschichtetes Substrats ist das Sputtern der Komponenten der modifizierten Titanoxidschicht von mindestens einem Target auf ein Substrat. Das Sputterverfahren gehört zu den PVD-Verfahren (PVD-englisch: physical vapor deposition), das auch als Kathodenzerstäubung bezeichnet wird. Hierbei wird in einer Vakuumkammer bei einem konstanten Gasdruck, beispielsweise 1 Pa, durch eine Gleich- oder Hochfrequenzspannung zwischen zwei Elektronen ein Plasma gezündet. Im Plasma entstehende positive Gasionen, beispielsweise Argonionen, werden beschleunigt und treffen auf einen an der Kathode angeordneten Feststoff, der auch als Target bezeichnet wird, auf. Die von den auftreffenden Argonionen aus dem Feststoff herausgeschlagen Atome diffundieren durch das Plasma und werden auf dem an der Anode angeordneten Substrat abgeschieden.

Im vorliegenden Fall hat es sich in der Praxis als günstig erwiesen, wenn beim Sputtern der Komponenten der modifizierten Titanoxidschicht ein Multikomponententarget verwendet wird. Alternativ dazu können auch mindestens zwei Targets verwendet werden, die in unmittelbarer Nachbarschaft zueinander und in Sichtverbindung zum Substrat stehen. Die Targets können planar oder als Rohrkathode angeordnet sein.

In einer besonderen Ausführungsform der vorliegenden Erfindung wird der Titanoxidschicht durch Sputtern in reaktiver Atmosphäre auf dem Substrat ausgebildet. Bei einer derartigen Sputterbeschichtung werden dem Sputtergas, beispielsweise Argon, und die Komponenten des weiteren Metalloxids als Gas hinzugefügt. Auf diese Weise entsteht auf dem Substrat der Schicht aus modifiziertem Titanoxid.

Alternativ kann das erfindungsgemäße beschichtetes Substrat auch durch ein CVD-Verfahren (CVD-englisch: chemical vapor deposition) hergestellt werden. Bei diesem Verfahren wird ein Gas, das einen Reaktanten enthält, einem Substrat in einem Reaktor zugeleitet. Der Reaktant reagiert unter Energiezugabe an der Substratoberfläche unter Bildung eines Reaktionsprodukts.

In einer besonders bevorzugten Ausführungsform der vorliegenden Erfindung wird die modifizierte Titanoxidschicht durch ein CVD-Verfahren mit Plasmaunterstützung abgeschieden.

Die gewünschte Zusammensetzung der modifizierten Titanoxidschicht kann eingestellt werden, indem der gasförmige Titan enthaltende Vorläufer und gasförmige Vorläufer des weiteren Metalloxids bei der gewählten Abscheidetemperatur gemischt werden. Bei den Vorläufern handelt es sich bevorzugt um Halogene, beispielsweise Chloride und/oder organische Verbindungen der schichtbildenden Materialien.

Üblicherweise wird der Gasdruck im Volumen vor dem zu beschichten Substrat zwischen 10⁻⁴ und 10⁻¹ mbar eingestellt. Bei beiden Verfahren, das heißt beim Sputterverfahren sowie beim CVD-Verfahren liegt in der Regel die Substrattemperatur in einem Bereich von 20°C bis 250°C.

Nach der erfolgten Beschichtung des Substrats mit der modifizierten Titanoxidschicht, gegebenenfalls mit weiteren Unter- und Oberschichten, wird das beschichtete Substrat zwischen 200°C und 700°C getempert, um das Schichtsystem beispielsweise thermisch vorzuspannen oder zu biegen. Es hat sich in überraschender Weise herausgestellt, dass das modifizierte Titanoxid im erfindungsgemäßen Belag dieser Erhitzung ohne Weiteres standhalten kann. Untersuchungen am wärmebehandelten Substrat haben ergeben, dass die modifizierte Titanoxidschicht keine Risse in ihrer Struktur aufweist. Das erfindungsgemäße substrat mit einer darauf ausgebildeten modifizierten Titanoxidschicht findet Verwendung bei der Herstellung von Low-E-Schichten oder bei Sonnenschutzschichten. Schließlich können die modifizierten Titanoxidschichten des erfindungsgemäßen hochtemperaturbeständigen Belags aufgrund ihrer photokatalytischen Eigenschaften bei Außenfassaden, beispielsweise bei der Beschichtung von Fassadenelementen, wie Verglasungen und Fensterrahmen verwendet werden.

## Patentansprüche

1. Ein beschichtetes Substrat aus einem transparenten Material mit einer über dem Substrat ausgebildeten Metalloxidschicht aus Titanoxid (TiOₓ), die bei hohen Temperaturen stabil ist, wobei auf der Titanoxidschicht eine Silberschicht vorhanden ist,
**dadurch gekennzeichnet,**
**dass** die Titanoxidschicht ein weiteres Metalloxid enthält, dessen Metallatom eine Koordinationszahl aufweist, die nicht der Koordinationszahl des Titans im Titanoxid entspricht,
**dass** das weitere Metalloxid Siliciumdioxid ist und
**dass** die Konzentration des Metallatoms des weiteren Metalloxids in der Titanoxidschicht in einem Bereich von 2 bis 10 At-%, bezogen auf die Titankonzentration, liegt.

2. Substrat nach Anspruch 1,
**dadurch gekennzeichnet,**
**dass** das eine weitere Metalloxid ein Metallatom der Koordinationszahl 4 aufweist.

3. Substrat nach Anspruch 1 oder 2,
**dadurch gekennzeichnet,**
**dass** die modifizierte Titanoxidschicht eine Dicke von 1 bis 1000 nm aufweist.

4. Substrat nach Anspruch 2,
**dadurch gekennzeichnet,**
**dass** die Dicke der Titanoxidschicht in einem Bereich von 1 bis 300nm liegt.

5. Substrat nach Anspruch 4,
**dadurch gekennzeichnet,**
**dass** die Dicke der Titanoxidschicht in einem Bereich von 2 bis 70 nm liegt.

6. Substrat nach mindestens einem der Ansprüche 1 bis 5,
**dadurch gekennzeichnet,**
**dass** das transparente Substrat Glas oder ein Kunststoff ist.

7. Substrat nach mindestens einem der Ansprüche 1 bis 6,
**dadurch gekennzeichnet,**
**dass** zwischen dem Substrat und der modifizierten Titanoxidschicht eine Zwischenschicht angeordnet ist.

8. Verfahren zur Herstellung eines Substrats nach einem der Ansprüche 1 bis 7 durch Sputtern der Komponenten der modifizierten Titanoxidschicht von mindestens einem Target auf dem Substrat.

9. Verfahren nach Anspruch 8,
**dadurch gekennzeichnet,**
**dass** ein Multikomponententarget verwendet wird.

10. Verfahren nach Anspruch 8,
**dadurch gekennzeichnet,**
**dass** mindestens zwei Targets verwendet werden, die in unmittelbarer Nachbarschaft zueinander und in Sichtverbindung zum Substrat stehen.

11. Verfahren nach Anspruch 10,
**dadurch gekennzeichnet,**
**dass** die Targets planar oder als Rohrkatode angeordnet werden.

12. Verfahren nach mindestens einem der Ansprüche 8 bis 11,
**dadurch gekennzeichnet,**
**dass** dem Sputtergas die Komponenten des weiteren Metalloxid als Gas hinzugefügt werden.

13. Verfahren nach Anspruch 12,
**dadurch gekennzeichnet,**
**dass** die Komponenten des weiteren Metalloxids in Form von Vorläuferverbindungen eingesetzt werden.

14. Verfahren zur Herstellung eines Substrats nach einem der Ansprüche 1 bis 7 durch ein CVD-Verfahren.

15. Verfahren nach Anspruch 14,
**dadurch gekennzeichnet,**
**dass** die Zusammensetzung der modifizierten Titanoxidschicht des Belags so ausgewählt wird, dass die Konzentration des Metallatoms des weiteren Metalloxids in der Titanoxidschicht in einem Bereich von 4 bis 10 At-%, bezogen auf die Titankonzentration, liegt.

16. Verfahren nach mindestens einem der Ansprüche 14 oder 15,
**dadurch gekennzeichnet,**
**dass** die Komponenten der modifizierten Titanoxidschicht als Vorläufer eingesetzt werden.

17. Verfahren nach Anspruch 16,
**dadurch gekennzeichnet,**
**dass** als Vorläufer Halogene und/oder organische Verbindungen der Komponenten der modifizierten Titanoxidschicht eingesetzt werden.

18. Verfahren nach mindestens einem der Ansprüche 14 bis 17,
**dadurch gekennzeichnet,**
**dass** die Substrattemperatur auf einen Bereich von 20 bis 250 °C eingestellt wird.

19. Verfahren nach mindestens einem der Ansprüche 14 bis 18,
**dadurch gekennzeichnet,**
**dass** das CVD-Verfahren in Gegenwart eines Plasmas durchgeführt wird.

20. Verfahren nach mindestens einem der Ansprüche 14 bis 19,
**dadurch gekennzeichnet,**
**dass** der Gasdruck im Volumen vor dem Substrat auf einen Bereich von zwischen 10⁻⁴ und 10⁻¹mbar eingestellt wird.

21. Verfahren nach mindestens einem der Ansprüche 8 bis 20,
**dadurch gekennzeichnet,**
**dass** das mit der modifizierten Titanoxidschicht beschichtete Substrat bei Temperaturen zwischen 200 und 700 °C getempert wird.

22. Verwendung eines Substrats nach mindestens einem der Ansprüche 1 bis 7 bei der Herstellung von Low-E-Schichten, Sonnenschutzschichten und Außenfassadenbeschichtungen.

## Claims

1. A coated substrate made of a transparent material with a metal oxide coating of titanium oxide (TiOₓ) which is formed over the substrate and is stable at high temperatures, wherein a silver coating is present on the titanium oxide coating,
**characterised in that**
the titanium oxide coating comprises a further metal oxide the metal atom of which has a coordination number which does not correspond with the coordination number of the titanium in the titanium oxide,
**in that** the further metal oxide is silicon dioxide and
**in that** the concentration of the metal atom of the further metal oxide in the titanium oxide coating lies in a range of from 2 to 10 at.%, related to the concentration of the titanium.

2. Substrate according to claim 1,
**characterised in that**
the further metal oxide has a metal atom with the coordination number 4.

3. Substrate according to claim 1 or 2,
**characterised in that**
the modified titanium oxide coating has a thickness of 1 to 1000 nm.

4. Substrate according to claim 2,
**characterised in that**
the thickness of the titanium oxide coating lies in a range of from 1 to 300 nm.

5. Substrate according to claim 4,
**characterised in that**
the thickness of the titanium oxide coating lies in a range of from 2 to 70 nm.

6. Substrate according to at least one of claims 1 to 5,
**characterised in that**
the transparent substrate is glass or a plastic.

7. Substrate according to at least one of claims 1 to 6,
**characterised in that**
an intermediate coating is arranged between the substrate and the modified titanium oxide coating.

8. Method for production of a substrate according to one of claims 1 to 7 by sputtering the components of the modified titanium oxide coating from at least one target on the substrate.

9. Method according to claim 8,
**characterised in that**
a multi-component target is used.

10. Method according to claim 8,
**characterised in that**
at least two targets are used which are disposed directly adjacent to one another and in visual contact with the substrate.

11. Method according to claim 10,
**characterised in that**
the targets are arranged in planar or in tubular cathode form.

12. Method according to at least one of claims 8 to 11,
**characterised in that**
the components of the further metal oxide are added to the sputtering gas in gaseous form.

13. Method according to claim 12,
**characterised in that**
the components of the further metal oxide are introduced in the form of precursor compounds.

14. Method for production of a substrate according to one of claims 1 to 7 by a CVD process.

15. Method according to claim 14,
**characterised in that**
the composition of the modified titanium oxide coating of the substrate is selected so that the concentration of the metal atom of the further metal oxide in the titanium oxide coating lies in a range of from 4 to 10 at.%, related to the concentration of the titanium.

16. Method according to at least one of claims 14 or 15,
**characterised in that**
the components of the modified titanium oxide coating are introduced in the form of precursors.

17. Method according to claim 16,
**characterised in that**
halogens and/or organic compounds of the components of the modified titanium oxide coating are introduced as precursors.

18. Method according to at least one of claims 14 to 17,
**characterised in that**
the substrate temperature is set to a range of from 20 to 250 °C.

19. Method according to at least one of claims 14 to 18,
**characterised in that**
the CVD process is carried out in the presence of a plasma.

20. Method according to at least one of claims 14 to 19,
**characterised in that**
the gas pressure in the volume in front of the substrate is set to a range of between 10⁻⁴ and 10⁻¹ mbar.

21. Method according to at least one of claims 8 to 20,
**characterised in that**
the substrate coated with the modified titanium oxide coating is tempered at temperatures of between 200 and 700 °C.

22. Use of a substrate according to at least one of claims 1 to 7 for the production of low E coatings, sun protection coatings and exterior facade coatings.

## Revendications

1. Substrat revêtu en un matériau transparent avec une couche d'oxyde métallique en oxyde de titane (TiOₓ) formée au-dessus du substrat, qui est stable aux hautes températures, où une couche d'argent est présente sur la couche d'oxyde de titane,
**caractérisé en ce que** la couche d'oxyde de titane contient un autre oxyde métallique dont l'atome métallique présente un nombre de coordination qui ne correspond pas au nombre de coordination du titane dans l'oxyde de titane,
**en ce que** l'autre oxyde métallique est le dioxyde de silicium et **en ce que** la concentration de l'atome métallique de l'autre oxyde métallique dans la couche d'oxyde de titane est située dans un domaine de 2 à 10 at-%, par rapport à la concentration de titane.

2. Substrat selon la revendication 1, **caractérisé en ce qu'**un autre oxyde métallique présente un atome métallique de nombre de coordination 4.

3. Substrat selon la revendication 1 ou 2, **caractérisé en ce que** la couche d'oxyde de titane modifiée présente une épaisseur de 1 à 1000 nm.

4. Substrat selon la revendication 2, **caractérisé en ce que** l'épaisseur de la couche d'oxyde de titane est située dans un domaine de 1 à 300 nm.

5. Substrat selon la revendication 4, **caractérisé en ce que** l'épaisseur de la couche d'oxyde de titane est située dans un domaine de 2 à 70 nm.

6. Substrat selon au moins l'une des revendications 1 à 5, **caractérisé en ce que** le substrat transparent est du verre ou une matière synthétique.

7. Substrat selon au moins l'une des revendications 1 à 6, **caractérisé en ce qu'**une couche intermédiaire est disposée entre le substrat et la couche d'oxyde de titane modifiée.

8. Procédé pour fabriquer un substrat selon l'une des revendications 1 à 7 par pulvérisation cathodique des composants de la couche d'oxyde de titane modifiée d'au moins une cible sur le substrat.

9. Procédé selon la revendication 8, **caractérisé en ce qu'**une cible à composants multiples est utilisée.

10. Procédé selon la revendication 8, **caractérisé en ce qu'**au moins deux cibles, qui sont situées au voisinage immédiat l'une de l'autre et en liaison optique avec le substrat, sont utilisées.

11. Procédé selon la revendication 10, **caractérisé en ce que** les cibles sont disposées de manière plane ou sous forme de cathode tubulaire.

12. Procédé selon au moins l'une des revendications 8 à 11, **caractérisé en ce que** les composants de l'autre oxyde métallique sont ajoutés sous forme de gaz au gaz de pulvérisation cathodique.

13. Procédé selon la revendication 12, **caractérisé en ce que** les composants de l'autre oxyde métallique sont utilisés sous forme de composés précurseurs.

14. Procédé pour fabriquer un substrat selon l'une des revendications 1 à 7 par un procédé CVD.

15. Procédé selon la revendication 14, **caractérisé en ce que** la composition de la couche d'oxyde de titane modifiée du revêtement est choisie de telle manière que la concentration de l'atome métallique de l'autre oxyde métallique dans la couche d'oxyde de titane est située dans un domaine de 4 à 10 at-%, par rapport à la concentration de titane.

16. Procédé selon au moins l'une des revendications 14 ou 15, **caractérisé en ce que** les composants de la couche d'oxyde de titane modifiée sont utilisés comme précurseurs.

17. Procédé selon la revendication 16, **caractérisé en ce que** des halogènes et/ou des composés organiques des composants de la couche d'oxyde de titane modifiée sont utilisés comme précurseurs.

18. Procédé selon au moins l'une des revendications 14 à 17, **caractérisé en ce que** la température du substrat est ajustée dans un domaine de 20 à 250°C.

19. Procédé selon au moins l'une des revendications 14 à 18, **caractérisé en ce que** le procédé CVD est mis en oeuvre en présence d'un plasma.

20. Procédé selon au moins l'une des revendications 14 à 19, **caractérisé en ce que** la pression de gaz dans le volume devant le substrat est ajustée dans un domaine de entre 10⁻⁴ et 10⁻¹ mbar.

21. Procédé selon au moins l'une des revendications 8 à 20, **caractérisé en ce que** le substrat revêtu de la couche d'oxyde de titane modifiée est trempé à des températures entre 200 et 700°C.

22. Utilisation d'un substrat selon au moins l'une des revendications 1 à 7 dans la fabrication de couches low-E, de couches de protection contre le soleil et de revêtements de façades extérieures.
